# EUROPÄISCHE PATENTSCHRIFT

(11) **EP 3 589 459 B1**
(45) Veröffentlichungstag und Bekanntmachung des Hinweises auf die Patenterteilung: **21.04.2021**
(21) Anmeldenummer: 18716479.3
(22) Anmeldetag: 27.02.2018
(51) Int. Cl.: B25J 9/16

(54) **KNICKARMROBOTER UND VERFAHREN ZUM SPANENDEN BEARBEITEN EINES WERKSTÜCKES MITTELS DEM KNICKARMROBOTER**
ARTICULATED-ARM ROBOT AND METHOD FOR MACHINING A WORKPIECE BY MEANS OF THE ARTICULATED-ARM ROBOT
ROBOT À BRAS ARTICULÉ ET PROCÉDÉ D'USINAGE PAR ENLÈVEMENT DE COPEAUX D'UNE PIÈCE AU MOYEN DU ROBOT À BRAS ARTICULÉ

(30) Priorität: 28.02.2017 AT 501582017
(43) Veröffentlichungstag der Anmeldung: 08.01.2020
(73) Patentinhaber: Fill Gesellschaft m.b.H., 4942 Gurten (AT)
(72) Erfinder: SEHRSCHÖN, Harald, 4924 Waldzell (AT)
(74) Vertreter: Burger, Hannes
(86) Internationale Anmeldenummer: PCT/AT2018/060052
(87) Internationale Veröffentlichungsnummer: WO 2018/157184

(56) Entgegenhaltungen:
- EP-A1- 1 696 216
- EP-A1- 2 447 013
- EP-A2- 0 333 352
- EP-A2- 0 985 989

## Beschreibung

Die Erfindung betrifft einen Knickarmroboter, sowie ein Verfahren zum Bearbeiten eines Werkstückes mittels dem Knickarmroboter.

Aus dem Stand der Technik sind Knickarmroboter bekannt, die einen Arbeitskopf mit einer in einem Spindelgehäuse aufgenommenen Arbeitsspindel aufweisen. In der Arbeitsspindel ist ein Bearbeitungswerkzeug gespannt. Durch Andrücken des Bearbeitungswerkzeuges an das zu bearbeitende Werkstück wird eine Kraft auf den Knickarmroboter ausgeübt durch welche sich der Knickarmroboter geringfügig verformt. Durch die Verformung des Knickarmroboters werden Ungenauigkeiten bei der Bearbeitung des Werkstückes hervorgerufen.

Die EP 1696216 A1 offenbart einen Knickarmroboter umfassend eine Basis, eine Arbeitskopfaufnahme, mehrere Hebelarme, welche zwischen der Basis und der Arbeitskopfaufnahme angeordnet sind, wobei die Hebelarme mittels Drehgelenken miteinander gekoppelt sind und wobei pro Drehgelenk zumindest ein Stellmotor ausgebildet ist, welcher zur Verstellung des Winkels zwischen den beiden mittels des betreffenden Drehgelenkes gekoppelten Hebelarmen dient. Weiters ist ein Arbeitskopf vorgesehen, welcher an der Arbeitskopfaufnahme angeordnet ist, wobei der Arbeitskopf eine in einem Spindelgehäuse angeordnete Arbeitsspindel umfasst, welche zumindest an einer ersten Lagerstelle und einer zweiten Lagerstelle im Spindelgehäuse gelagert ist. Weiters ist vorgesehen, dass ein Getriebe zwischen dem Stellmotor und dem dazugehörigen Drehgelenk ausgebildet ist. Im Getriebe ist eine Getriebewelle ausgebildet, wobei in den Lagerstellen der Getriebewelle Sensoren vorgesehen sind, welche zur Erfassung der Drehmomente und Biegemomente in der Getriebewelle dienen.

Aufgabe der vorliegenden Erfindung war es, die Nachteile des Standes der Technik zu überwinden und einen verbesserten Knickarmroboter, sowie ein verbessertes Verfahren zur Bearbeitung eines Werkstückes zur Verfügung zu stellen.

Diese Aufgabe wird durch eine Vorrichtung und ein Verfahren gemäß den Ansprüchen gelöst. Erfindungsgemäß ist ein Knickarmroboter ausgebildet. Der Knickarmroboter umfasst: eine Basis, eine Arbeitskopfaufnahme, mehrere Hebelarme, welche zwischen der Basis und der Arbeitskopfaufnahme angeordnet sind, wobei die Hebelarme mittels Drehgelenken miteinander gekoppelt sind und wobei pro Drehgelenk zumindest ein Stellmotor ausgebildet ist, welcher zur Verstellung des Winkels zwischen den beiden mittels dem betreffenden Drehgelenk gekoppelten Hebelarmen dient, ein Arbeitskopf, welcher an der Arbeitskopfaufnahme angeordnet ist, wobei der Arbeitskopf eine in einem Spindelgehäuse angeordnete Arbeitsspindel umfasst, welche zumindest an einer ersten Lagerstelle und einer zweiten Lagerstelle im Spindelgehäuse gelagert ist, eine Recheneinheit, welche zur Steuerung der Stellmotoren dient. An der ersten Lagerstelle und an der zweiten Lagerstelle ist jeweils zumindest ein Sensor zur Erfassung einer Radialkraft ausgebildet. An zumindest einer der beiden Lagerstellen ist zumindest ein Sensor zur Erfassung einer Axialkraft ausgebildet.

Von Vorteil an der erfindungsgemäßen Ausbildung des Knickarmroboters ist, dass durch die Anordnung der Sensoren direkt in den Lagerstellen, auf das Bearbeitungswerkzeug wirkende Axialbelastungen, Radialbelastungen sowie Biegemomente erfasst werden können. Darüber hinaus weisen Sensoren welche an den Lagerstellen angeordnet sind, eine hohe Erfassungsgenauigkeit auf, da auftretende Kräfte möglichst direkt gemessen werden können. Die Masse und damit auch die Massenträgheit der zwischen dem Kraftangriffspunkt (Toolcenterpoint) und den Sensoren zwischenliegenden Teile ist sehr gering, da es sich hier nur um das Bearbeitungswerkzeug selbst und um die Arbeitsspindel handelt. Da diese eine geringe Masse aufweisen ist auch die zu berücksichtigende Massenträgheit gering und kann gegebenenfalls noch miteinberechnet werden.

Weiters kann es zweckmäßig sein, wenn die beiden Lagerstellen durch eine Magnetlagerung gebildet sind und die Sensoren durch eine Messeinrichtung zur Bestimmung der Feldstärke in der Magnetlagerung und zur Erfassung der Auslenkung der Arbeitsspindel relativ zum Spindelgehäuse realisiert sind. Von Vorteil ist hierbei, dass mittels einer Magnetlagerung eine hohe Drehzahl des Bearbeitungswerkzeuges realisiert werden kann. Darüber hinaus können in der Magnetlagerung die anliegenden Kräfte präzise bestimmt werden.

Ferner kann vorgesehen sein, dass die Arbeitsspindel mittels der Magnetlagerung relativ zum Spindelgehäuse verstellbar ist. Von Vorteil ist hierbei, dass durch diese Maßnahme die Arbeitsspindel zum Ausgleich von Verformungen relativ zum Spindelgehäuse verschoben werden kann, wodurch geringe im Knickarmroboter auftretende Verformungen ausgeglichen werden können. Von besonderem Vorteil ist hierbei, dass mittels der Magnetlagerung geringe Verformungen mit einer nur sehr kurzen Reaktionszeit ausgeglichen werden können. Darüber hinaus ist es beispielsweise auch denkbar, dass mittels der Magnetlagerung die Arbeitsspindel relativ zum Spindelgehäuse in Schwingung versetzt wird und somit beispielsweise hochfrequente Axialschwingungen durchgeführt werden. Diese Axialschwingung kann beispielsweise eine verbesserte Spanbildung bewirken.

In einer Alternativvariante kann vorgesehen sein, dass die Sensoren in Form von Piezoelementen ausgebildet sind. Derartige Sensoren in Form von Piezo-Elementen können beispielsweise mit herkömmlichen Wälzlagern oder auch Gleitlagern kombiniert werden.

In wieder einer anderen Alternativvariante kann vorgesehen sein, dass die beiden Lagerstellen durch ein hydrodynamisches Gleitlager gebildet sind und die Sensoren durch eine Messeinrichtung zur Bestimmung des Hydraulikdruckes in den Lagerstellen und zur Erfassung der Auslenkung der Arbeitsspindel relativ zum Spindelgehäuse realisiert sind, wobei mittels der hydrodynamischen Gleitlager die Arbeitsspindel relativ zum Spindelgehäuse verstellbar ist. Ein hydrodynamisches Gleitlager weist eine Möglichkeit zur Verstellung der Arbeitsspindel relativ zum Spindelgehäuse auf. Das hydrodynamische Gleitlager kann beispielsweise unter Verwendung eines Öls betrieben werden. Darüber hinaus ist es auch denkbar, dass das hydrodynamische Gleitlager unter Verwendung eines Gases betrieben wird.

Gemäß einer Weiterbildung ist es möglich, dass das Spindelgehäuse mittels einer Linearführung axial verschiebbar am Arbeitskopf aufgenommen ist. Von Vorteil ist hierbei, dass beispielsweise beim Durchführen eines Bohrvorganges mittels einem in der Arbeitsspindel gespannten Bohrer die Zustellbewegung des Bohrers nicht mittels den Roboterarmen erfolgen muss, sondern dass das Spindelgehäuse linear verschoben werden kann. Dadurch kann die Genauigkeit der Bohrung erhöht werden. Darüber hinaus können derartige Zustellbewegungen direkt an den Sensoren der Lagerstellen detektiert werden.

Ferner kann es zweckmäßig sein, wenn am Arbeitskopf eine Anlagemanschette ausgebildet ist, welche zum Anlegen an ein zu bearbeitendes Werkstück vorgesehen ist und dass in der Anlagemanschette ein weiterer Sensor zur Erfassung der Anlagekraft der Anlagemanschette am Werkstück ausgebildet ist. Von Vorteil ist hierbei, dass durch die Anlagemanschette der gesamte Arbeitskopf mit einer vorbestimmten Kraft an das zu bearbeitende Werkstück angedrückt werden kann, wodurch der Knickarmroboter unter Vorspannung gebracht werden kann. Bei anschließendem Andrücken des Bearbeitungswerkzeuges an das Werkstück kann die Verringerung der am weiteren Sensor gemessenen Andrückkraft bestimmt werden und dadurch direkt auf die durch das Bearbeitungswerkzeug aufgebrachte Andrückkraft rückgeschlossen werden. Dies kann beispielsweise zum Abgleichen mit den in den Sensoren gemessenen Kräften dienen.

Darüber hinaus kann vorgesehen sein, dass am Arbeitskopf ein Vibrationssensor ausgebildet ist, welcher zur Erfassung von Schwingungen am Werkstück dient. Von Vorteil ist hierbei, dass mittels dem Vibrationssensor die vom Bearbeitungswerkzeug auf das Werkstück übertragenen Schwingungen erfasst und in weiterer Folge in der Recheneinheit ausgewertet werden können.

Weiters kann vorgesehen sein, dass der Vibrationssensor in der Anlagemanschette aufgenommen ist. Von Vorteil ist hierbei, dass ein in der Anlagemanschette aufgenommener Vibrationssensor direkt mit dem Werkstück in Berührung gebracht werden kann.

Gemäß einer besonderen Ausprägung ist es möglich, dass der Vibrationssensor frei schwingbar am Arbeitskopf, insbesondere in der Anlagemanschette, aufgenommen ist und mit dem Werkstück koppelbar ist. Von Vorteil ist hierbei, dass durch diese Maßnahme die Schwingungen des Arbeitskopfes ausgekoppelt werden können und somit die am Werkstück auftretenden Schwingungen erfasst werden können.

Entsprechend einer vorteilhaften Weiterbildung kann vorgesehen sein, dass der Vibrationssensor in Form eines Beschleunigungssensors, insbesondere in Form eines Piezosensors ausgebildet ist, mittels welchem seine eigene Ausrichtung und auch eine Amplitude und Richtung der Schwingung des Werkstückes bestimmbar ist, wenn der Vibrationssensor am Werkstück anliegt. Von Vorteil ist hierbei, dass mittels einem derartig ausgebildeten Beschleunigungssensor die Schwingungen des Werkstückes nicht nur quantitativ sondern auch qualitativ erfasst und ausgewertet werden können. Darüber hinaus kann mittels dem Vibrationssensor in Form eines Beschleunigungssensors die räumliche Orientierung des Vibrationssensors erfasst werden.

In einer Alternativvariante kann vorgesehen sein, dass der Vibrationssensor in Form eines Laser-Doppler-Vibrometers ausgebildet ist. Von Vorteil ist hierbei, dass mittels einem Laser-Doppler-Vibrometer eine berührungslose Erfassung der Oberflächenschwingung des Werkstückes ermöglicht wird.

Erfindungsgemäß ist ein Verfahren zum spanenden Bearbeiten eines Werkstückes mittels einem erfindungsgemäßen Knickarmroboter vorgesehen, wobei in der Arbeitsspindel ein Bearbeitungswerkzeug zur spanenden Bearbeitung des Werkstückes aufgenommen bzw. gespannt ist. Beim Andrücken des Bearbeitungswerkzeuges an das Werkstück wird mittels der Sensoren die Radialkraft und die Axialkraft in den Lagerstellen erfasst. In der Recheneinheit kann dadurch die Andrückkraft des Bearbeitungswerkzeuges an das Werkstück berechnet werden. Durch Erfassung der Schwingung in Kombination mit der erfassten Andrückkraft des Bearbeitungswerkzeuges an das Werkstück kann beispielsweise auf einen Verschleiß an der Schneide bzw. auf die Werkstückbeschaffenheit geschlossen werden.

Ferner kann vorgesehen sein, dass auf Basis der berechneten Andrückkraft des Bearbeitungswerkzeuges und auf Basis einer bekannten kraftabhängigen Bauteilverformung des Knickarmroboters eine notwendige Lagekompensation berechnet wird und zumindest in einem der Stellmotoren die notwendige Lagekompensation realisiert wird. Von Vorteil ist hierbei, dass durch die Berücksichtigung der kraftabhängigen Bauteilverformung des Knickarmroboters die Genauigkeit des Knickarmroboters erhöht werden kann.

Darüber hinaus kann vorgesehen sein, dass auf Basis der berechneten Andrückkraft des Bearbeitungswerkzeuges und auf Basis einer bekannten kraftabhängigen Bauteilverformung des Knickarmroboters eine notwendige Lagekompensation berechnet wird und dass die notwendige Lagekompensation zumindest teilweise durch Verstellung der Arbeitsspindel relativ zu dem Spindelgehäuse realisiert wird. Von Vorteil ist hierbei, dass durch Verstellung der Arbeitsspindel relativ zum Spindelgehäuse die Lagekompensation mit einer erhöhten Genauigkeit durchgeführt werden kann. Darüber hinaus kann eine derartige Lagerkompensation relativ schnell und mit einer kurzen Reaktionszeit durchgeführt werden. Die Lagekompensation mittels der Arbeitsspindel kann mit der Lagekompensation mittels des Knickarmroboters überlagert werden.

Vorteilhaft ist auch eine Ausprägung, gemäß welcher vorgesehen sein kann, dass bei einer Magnetlagerung die Radialkraft und die Axialkraft in den Lagerstellen durch Bestimmung der Feldstärke in den Magnetlagerungen und durch Erfassung der Auslenkung der Arbeitsspindel erfasst wird.

Gemäß einer Weiterbildung ist es möglich, dass eine Verstellung der Arbeitsspindel relativ zu dem Spindelgehäuse dadurch realisiert wird, dass die Feldstärke in den Magnetlagerungen lokal angepasst wird.

Ferner kann es zweckmäßig sein, wenn bei Verwendung eines Bearbeitungswerkzeuges mit einem symmetrischem Schneidenaufbau, insbesondere bei Verwendung eines Bohrwerkzeuges, ein Anlagewinkel zwischen einer Drehachse des Bearbeitungswerkzeuges und der Werkstückoberfläche an welcher das Bearbeitungswerkzeug anliegt mittels dem Hebelgesetz aus den erfassten Radialkräften berechnet wird. Von Vorteil ist hierbei, dass nur durch die Bestimmung der Radialkräfte der Anlagewinkel des Bearbeitungswerkzeuges relativ zum zu bearbeitenden Werkstück berechnet werden kann und im Bedarfsfall das Bearbeitungswerkzeug entsprechend nachgedreht werden kann, sodass die Rotationsachse des Bearbeitungswerkzeuges im rechten Winkel auf die Werkstückoberfläche steht.

Darüber hinaus kann vorgesehen sein, dass zusätzlich zur berechneten Andrückkraft des Bearbeitungswerkzeuges, die durch den weiteren Sensor erfasste Anlagekraft der Anlagemanschette am Werkstück zur Berechnung der notwendigen Lagenkompensation mit einbezogen wird.

Weiters kann vorgesehen sein, dass in der Recheneinheit das Signal des Vibrationssensors ausgewertet wird und auf Basis des Signals des Vibrationssensors und der gemessenen Radialkraft und Axialkraft in den Lagerstellen die notwendige Lagekompensation berechnet wird.

Die Ausdrücke Radialkraft und Axialkraft beziehen sich auf die Achslage der Arbeitsspindel.

Zum besseren Verständnis der Erfindung wird diese anhand der nachfolgenden Figuren näher erläutert.

Es zeigen jeweils in stark vereinfachter, schematischer Darstellung:
- Fig. 1: ein Ausführungsbeispiel eines Knickarmroboters in einer perspektivischen Ansicht;
- Fig. 2: eine Detaildarstellung eines Arbeitskopfes;
- Fig. 3: eine perspektivische Ansicht eines Spindelgehäuses;
- Fig. 4: eine schematische Schnittdarstellung eines Spindelgehäuses mit darin aufgenommener Arbeitsspindel und Darstellung der Lagersituation;
- Fig. 5: eine schematische Darstellung der Krafteinwirkung auf die Lagersituation bei einem nicht orthogonal zur Oberfläche des Werkstückes stehendem Bearbeitungswerkzeug;
- Fig. 6: ein Ausführungsbeispiel der Arbeitsspindel mit Magnetlagerung;
- Fig. 7: ein Ausführungsbeispiel der Arbeitsspindel mit hydrodynamischer Lagerung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

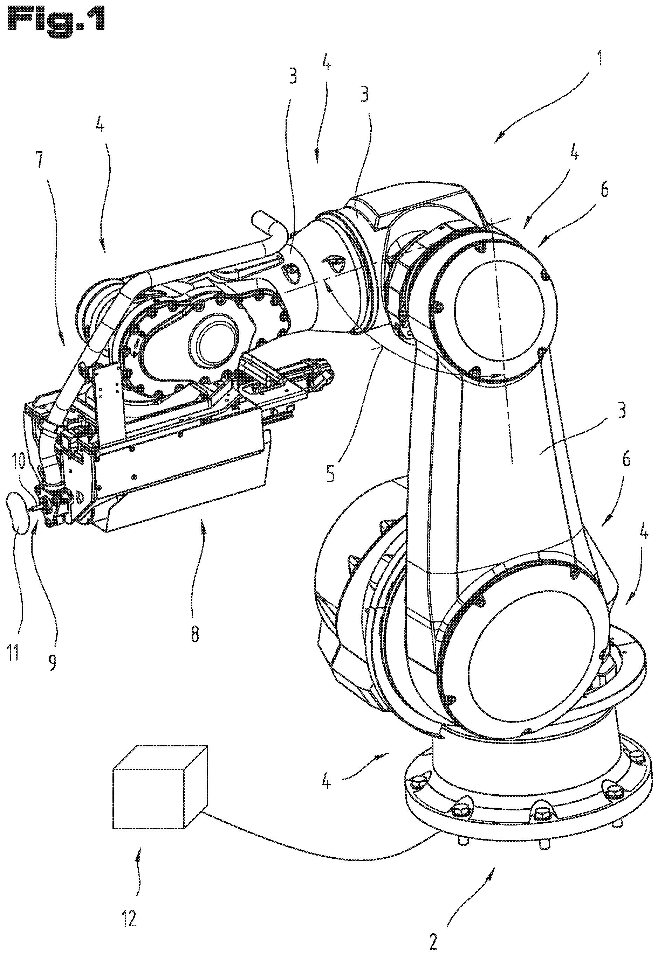

In der Fig. 1 ist ein Knickarmroboter 1 in einer perspektivischen Ansicht dargestellt. Der Knickarmroboter 1 umfasst eine Basis 2 welche vorzugsweise mittels Befestigungsmittel am Untergrund des Aufstellungsortes fixiert ist. Beispielsweise ist es auch denkbar, dass die Basis 2 an einer Linearführung angeordnet ist, sodass der komplette Knickarmroboter 1 in einer Längsrichtung verschiebbar ist.

Mit der Basis 2 sind mehrere Hebelarme 3 gekoppelt, wobei die einzelnen Hebelarme 3 untereinander bzw. einer der Hebelarme 3 mit der Basis 2 mittels Drehgelenken 4 gekoppelt sind. Die Drehgelenke 4 können unterschiedlich ausgebildet sein. Sie dienen vorzugsweise zur Verstellung eines Winkels 5 zwischen zwei miteinander gekoppelten Hebelarmen 3.

In einer ersten Ausführungsart von Drehgelenk 4 sind die beiden Hebelarme 3 bezüglich deren Längsachse axial fluchtend zueinander angeordnet und mittels dem Drehgelenk 4 kann einer der beiden Hebelarme 3 relativ zum anderen Hebelarm 3 um die zentrale Längsachse rotierend verdreht werden.

In einer zweiten Ausführungsform des Drehgelenkes 4 sind die beiden Hebelarme 3 nebeneinander angeordnet und die Hebelarme 3 können relativ zueinander verschwenkt werden, sodass der Winkel 5 zwischen den beiden Längsachsen der Hebelarme 3 variiert werden kann.

Weiters ist jedem Drehgelenk 4 ein Stellmotor 6 zugeordnet, mittels welchem der Winkel 5 zwischen den beiden Hebelarmen 3 verstellt werden kann. Der Stellmotor 6 kann beispielsweise in Form eines Servomotors ausgebildet sein. Am von der Basis 2 weitest entfernten Hebelarm 3 ist eine Arbeitskopfaufnahme 7 ausgebildet, an welcher ein Arbeitskopf 8 befestigt ist.

Der Arbeitskopf 8 weist eine Arbeitsspindel 9 auf, an ein Bearbeitungswerkzeug 10 aufgenommen werden kann. Insbesondere kann an der Arbeitsspindel 9 eine Werkzeugaufnahme zum Aufnehmen von verschiedensten Bearbeitungswerkzeugen 10 ausgebildet sein, bzw. kann eine derartige Werkzeugaufnahme mit der Arbeitsspindel 9 gekoppelt sein. Das Bearbeitungswerkzeug 10 dient zum Bearbeiten eines Werkstückes 11. Insbesondere kann vorgesehen sein, dass das Bearbeitungswerkzeug 10 ein Werkzeug zur spanenden Bearbeitung, wie etwa ein Bohrer oder ein Fräser ist.

Weiters ist eine Recheneinheit 12 vorgesehen, in welcher die entsprechenden Steuervorgaben, bzw. Korrekturen auf Basis der Materialverformung berechnet wird.

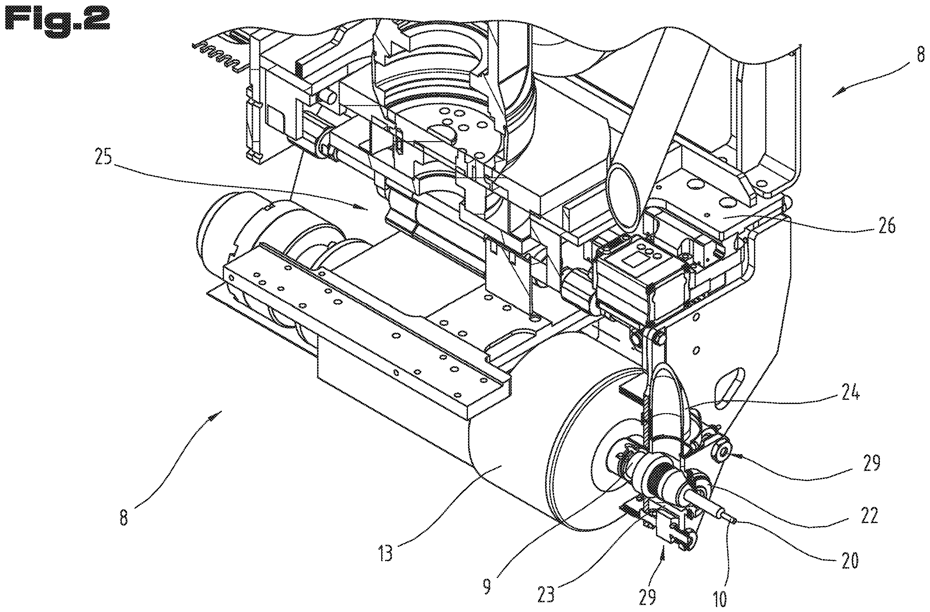

In der Fig. 2 ist der Arbeitskopf 8 in einer Detailansicht dargestellt, wobei die Bestandteile des Arbeitskopfes 8 teilweise geschnitten dargestellt sind, sodass der Aufbau des Arbeitskopfes 8 ersichtlich ist.

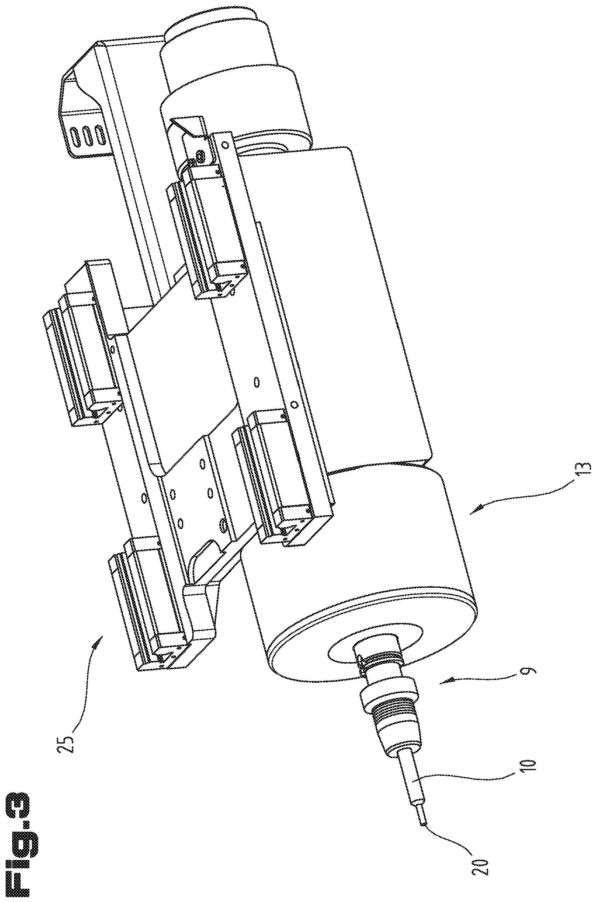

In der Fig. 3 ist ein Spindelgehäuse 13 zur Aufnahme der Arbeitsspindel 9 detailliert in einer perspektivischen Ansicht dargestellt.

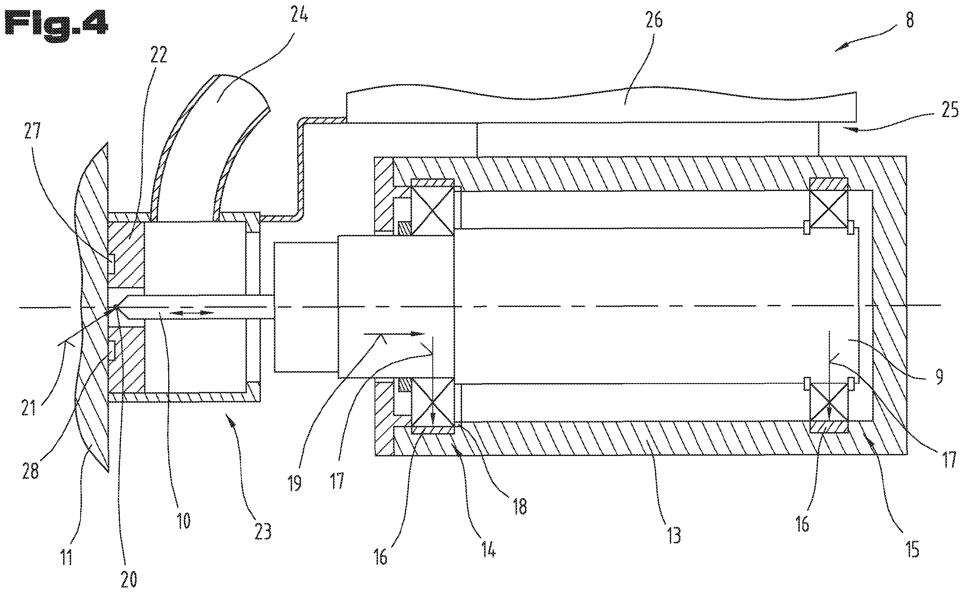

In Fig. 4 ist zur weiteren Veranschaulichung das Spindelgehäuse 13 geschnitten dargestellt, um die Lagersituation zu beschreiben.

Der genaue Aufbau des Arbeitskopfes 8 wird anhand einer Zusammenschau der Figuren 2 bis 4 beschrieben. Wie besonders gut aus Fig. 4 ersichtlich, ist die Arbeitsspindel 9 mittels einer ersten Lagerstelle 14 und einer zweiten Lagerstelle 15 im Spindelgehäuse 13 gelagert. Die erste Lagerstelle 14 bzw. die zweite Lagerstelle 15 sind in Fig. 4 schematisch angedeutet und können durch verschiedenste Lagerungen realisiert sein. Beispielsweise ist es denkbar, dass die Lagerstellen 14, 15 in Form von Wälzlagern, Gleitlager, Magnetlager, oder hydrodynamischen Fluidlager ausgebildet sind. Die Einbausituation wie sie in Fig. 4 schematisch dargestellt ist, kann beispielsweise bei der Verwendung von Wälzlagern realisiert sein.

Wie aus Fig. 4 ersichtlich, kann vorgesehen sein, dass eine der beiden Lagerstellen 14, 15 in Form eines Festlagers ausgeführt ist, welches zur Aufnahme von axialen Kräften dient. Im vorliegenden Ausführungsbeispiel ist die erste Lagerstelle 14 als Festlager ausgeführt. Insbesondere kann hierbei vorgesehen sein, dass in der ersten Lagerstelle 14 ein Sensor 16 ausgebildet ist, welcher zur Erfassung einer Radialkraft 17 dient. Weiters kann an der ersten Lagerstelle 14 ein Sensor 18 ausgebildet sein, welcher zur Erfassung einer Axialkraft 19 dient. Darüber hinaus kann an der zweiten Lagerstelle 15 ebenfalls ein Sensor 16 zur Erfassung der Radialkraft 17 ausgebildet ist. Natürlich kann auch der zweiten Lagerstelle 15 bzw. auch an beiden Lagerstellen 14, 15 ein Sensor 18 zur Erfassung einer Axialkraft ausgebildet sein.

Die Sensoren 16 zur Erfassung der Radialkraft 17 können beispielsweise in Form von Piezo-Elementen ausgebildet sein, welche über den Umfang verteilt im Spindelgehäuse 13 oder an der Arbeitsspindel 9 angeordnet sein können. Die Sensoren 16 können nicht nur zur Erfassung des Betrages der Radialkraft 17 sondern auch zur Erfassung der Richtung der Radialkraft 17 dienen. Der Sensor 18 zur Erfassung der Axialkraft 19 kann ebenfalls in Form eines PiezoElementes ausgebildet sein, welcher beispielsweise als axialer Anschlag für eine der Lagerstellen 14, 15 dienen kann.

Durch die bekannte Geometrie der Lagerstellen 14, 15 bzw. durch einen exakt vermessenen Toolcenterpoint des Werkstückes 11 kann mittels der Sensoren 16, 18 exakt der Betrag und die Richtung einer auf den Toolcenterpoint 20 wirkenden Kraft 21 bestimmt werden.

Die Kraft 21 wird dadurch hervorgerufen, dass das Bearbeitungswerk 10 zur Bearbeitung des Werkstückes 11, insbesondere an seinem Toolcenterpoint 20 am Werkstück 11 anliegt bzw. angedrückt wird. Vernachlässigt man die Reibung zwischen dem Werkstück 11 und dem Bearbeitungswerkzeug 10 so kann die Kraft 21 immer nur im rechten Winkel auf die Oberfläche des Werkstückes 11 stehen. Aufgrund der Reibung zwischen dem Bearbeitungswerkzeug 10 und dem Werkstück 11 kann der Angriffswinkel der Kraft 21 vom rechten Winkel auf die Oberfläche des Werkstückes 11 abweichen.

Dadurch, dass mittels den Sensoren 16, 18 der Betrag und der Winkel der Kraft 21 auf den Toolcenterpoint 20 ermittelt werden kann, kann auch die auf das Gesamtsystem Knickarmroboter 1 wirkende Kraft berechnet werden.

Mittels Finite Elemente Berechnungen bzw. durch empirische Ermittlungen kann eine kraftabhängige Verformung des Knickarmroboters 1, insbesondere der Hebelarme 3 bzw. der Drehgelenke 4 für jede Stellung des Knickarmroboters 1 und auch für jede Kraftwirkung ermittelt werden. Dadurch lässt sich unter Kenntnis der Verformung des Knickarmroboters 1, seiner aktuellen Stellung und der aktuell anliegenden Kraft 21 auf den Toolcenterpoint 20 die verformungsbedingte Abweichung des Toolcenterpointes 20 von seiner Soll-Lage zu seiner tatsächlichen Ist-Lage berechnen. Diese Abweichung kann in einer Lagenkompensation, wie sie bereits beschrieben wurde, kompensiert werden.

Weiters ist es auch denkbar, dass durch Feststellung des Winkels der Kraft 21 auf den Toolcenterpoint 20 ermittelt wird, ob das Bearbeitungswerkzeug 10 auch tatsächlich im rechten Winkel an die Oberfläche des Werkstückes 11 anliegt. Gegebenenfalls kann hierbei ebenfalls in der Recheneinheit 12 eine notwendige Kompensation berechnet und durchgeführt werden.

Wie aus Fig. 4 weiters ersichtlich, kann vorgesehen sein, dass am Arbeitskopf 8 eine Anlagemanschette 22 ausgebildet ist, welche zur Anlage am Werkstück 11 dient. Mit der Anlagemanschette 22 kann ein Absauggehäuse 23 gekoppelt sein, an welches ein Absaugschlauch 24 angeschlossen ist. Das Absauggehäuse 23 kann ortsfest am Arbeitskopf 8 befestigt sein.

Weiters ist es auch denkbar, dass das Spindelgehäuse 13 mitsamt der Arbeitsspindel 9 mittels einer Linearführung 25 relativ zu einer Basis 26 des Arbeitskopfes 8 verschiebbar an diesem angeordnet ist. Mit anderen Worten ausgedrückt kann dadurch erreicht werden, dass das Spindelgehäuse 13 mitsamt der Arbeitsspindel 9 linear relativ zur Basis 26 des Arbeitskopfes 8 verschiebbar ist.

Dadurch kann eine Zustellung des Bearbeitungswerkzeuges 10 rein durch die lineare Verstellung des Spindelgehäuses 13 erreicht werden. Natürlich kann auch der eigentliche Bearbeitungsvorgang bzw. Bohrvorgang durch ausschließliche Verschiebung des Spindelgehäuses 13 erreicht werden. Da die Anlagemanschette 22 mit der Basis 26 des Arbeitskopfes 8 gekoppelt ist, wird bei einem derartigen Verschiebevorgang die Arbeitsspindel 9 und damit auch das Bearbeitungswerkzeug 10 zur Anlagemanschette 22 verschoben.

Weiters kann auch vorgesehen sein, dass die Basis 26 des Arbeitskopfes 8 mitsamt der Anlagemanschette 22 relativ zu der Arbeitskopfaufnahme 7 verschiebbar ist. Beispielsweise ist es hierbei denkbar, dass die Basis 26 des Arbeitskopfes 8 mitsamt der Anlagemanschette 22 mittels einem Pneumatikzylinder verschiebbar ist, wobei der Pneumatikzylinder die Anlagemanschette 22 mit einer vordefinierten Kraft an das Werkstück andrücken kann. Das Spindelgehäuse 13 kann mittels einem elektrischen Antrieb relativ zur Anlagemanschette 22 verschiebbar sein. Dadurch kann das Spindelgehäuse 13 exakt vorgeschoben bzw. zugestellt werden.

Weiters kann vorgesehen sein, dass in der Anlagemanschette 22 ein weiterer Sensor 27 ausgebildet ist, welcher zur Erfassung der Andrückkraft der Anlagemanschette 22 an das Werkstück 11 dient. In der Recheneinheit 12 kann eine resultierende Kraft aus der Radialkraft 17, welche den Sensoren 16 gemessen wird und aus der Axialkraft 19, welche in den Sensoren 18 gemessen wird, sowie aus jener Kraft, welche in dem weiteren Sensor 27 gemessen wird, berechnet werden.

Weiters ist es auch denkbar, dass in der Anlagemanschette 22 ein Vibrationssensor 28 angeordnet ist, welcher zur Erfassung von Vibrationen im Werkstück 11 ausgebildet ist. Der Vibrationssensor 28 kann beispielsweise durch eine magnetische Kraft am Werkstück 11 gehalten werden und frei schwingbar in der Anlagemanschette 22 aufgenommen sein. Dadurch kann erreicht werden, dass vom Vibrationssensor 28 ausschließlich die Vibrationen des Werkstücks 11 erfasst werden.

Eine freischwingende Aufhängung des Vibrationssensors 28 in der Anlagemanschette 22 kann beispielsweise dadurch erreicht werden, dass der Vibrationssensor 28 in einem Gelkissen eingebettet ist und dadurch relativ zur Anlagemanschette 22 verschiebbar ist. Weiters ist es auch denkbar, dass der Vibrationssensor 28 mittels einer elastischen Membrane oder einem sonstigen elastischen Element mit der Anlagemanschette 22 gekoppelt ist. Beispielsweise ist es auch denkbar, dass der Vibrationssensor 28 mittels einer federbasierten Aufhängung freischwingend mit der Anlagemanschette 22 gekoppelt ist.

Wie in Fig. 2 gut ersichtlich, ist es auch denkbar, dass im Bereich der Anlagemanschette 22 rund um die Arbeitsspindel 9 bzw. das Bearbeitungswerkzeug 10 zumindest drei Messelemente 29 angeordnet sind, mittels welchen jeweils der Abstand zur Oberfläche des Werkstückes 11 bestimmt werden kann. Durch Kenntnis der Oberflächenbeschaffenheit bzw. der Oberflächengeometrie des Werkstückes 11, beispielsweise aus einem CAD Modell, und Messung des tatsächlichen Abstandes der Oberfläche zum jeweiligen Messelement 29 kann errechnet werden, ob das Bearbeitungswerkzeug 10 orthogonal auf die Oberfläche des Werkstückes 11 ausgerichtet ist.

Das Messelement 29 kann beispielsweise in Form von einem Messstift ausgebildet sein, welcher mittels einer Feder vorgespannt an die Oberfläche des Werkstückes 11 angedrückt wird. Somit kann der Abstand durch taktiles Abtasten gemessen werden. Weiters ist es auch denkbar, dass das Messelement 29 beispielsweise in Form eines optischen Sensors, beispielsweise eines Lasersensors ausgebildet ist, welche zum Erfassen des Abstandes dient.

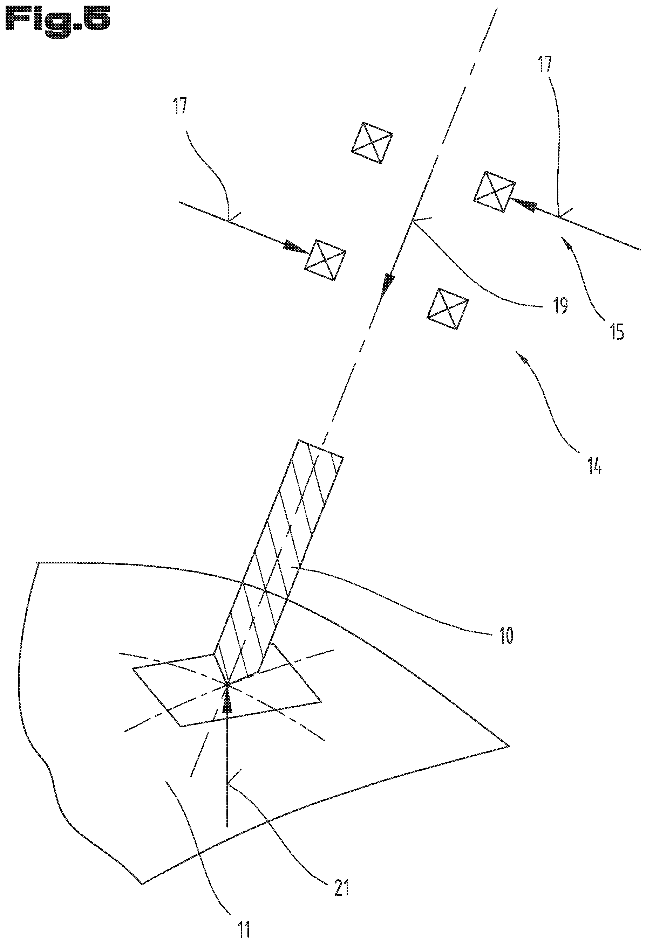

Fig. 5 zeigt eine schematische Darstellung der auftretenden Kräfte 17, 18 an den Lagerstellen 14, 15 und am Bearbeitungswerkzeug 10, wenn das Bearbeitungswerkzeug 10 nicht orthogonal auf die Oberfläche des Werkstückes 11 ausgerichtet ist und an dieses angedrückt wird. Unter Kenntnis der Geometrie des Bearbeitungswerkzeuges 10 und natürlich auch der Geometrie des Spindelgehäuses 13 kann durch Ermittlung des Betrages und der Richtung der Kräfte 17, 18 an den Lagerstellen 14, 15 kann der Winkel zwischen dem Bearbeitungswerkzeug 10 und der Oberfläche des Werkstückes 11 berechnet werden und durch Schwenken des Bearbeitungswerkzeuges 10 ausgeglichen werden, sodass das Bearbeitungswerkzeug 10 für den Bearbeitungsvorgang orthogonal auf die Oberfläche des Werkstückes 11 steht.

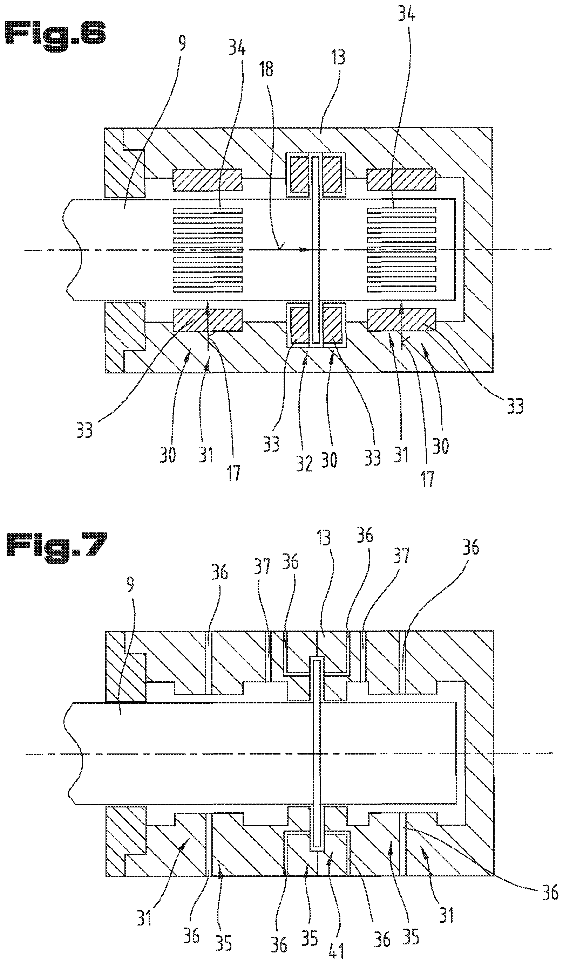

Fig. 6 zeigt in einer schematischen Schnittdarstellung ein weiteres mögliches Ausführungsbeispiel der Arbeitsspindel 9 und des Spindelgehäuses 13 mit Magnetlagerung 30.

Im Ausführungsbeispiel nach Fig. 6 ist vorgesehen, dass die Arbeitsspindel 9 mittels einer Magnetlagerung 30 im Spindelgehäuse 13 gelagert bzw. wahlweise angetrieben ist. Magnetlagerung 30 kann sowohl eine Radiallagerung 31 als auch eine Axiallagerung 32 aufweisen. Insbesondere kann vorgesehen sein, dass die Magnetlagerung 30 dadurch gebildet ist, dass im Spindelgehäuse 13 Wicklungen 33 ausgebildet sind, welche mit an der Arbeitsspindel 9 angeordneten Dauermagneten 34 zusammenwirken.

In den Wicklungen 33 kann mit einer entsprechenden Steuerung die Feldstärke derart verändert werden, dass die Arbeitsspindel 9 durch die Magnetlagerung 30 in dessen Position gehalten wird. Darüber hinaus kann die Feldstärke in den Wicklungen 33 der einzelnen Radiallagerungen 31 derart verändert werden, dass die Arbeitsspindel 9 nicht zentral angeordnet ist, sondern zu einer Seite verschoben wird. Dadurch kann eine Verkippung oder eine Exzentrizität der Arbeitsspindel 9 im Spindelgehäuse 13 erreicht werden. Außerdem kann vorgesehen sein, dass die Feldstärke in den Wicklungen 33 der Axiallagerungen 32 angepasst wird, sodass die Arbeitsspindel 9 axial verschoben werden kann. Insbesondere ist es hierbei möglich, dass kleine kraftbedingte Verformungen des Knickarmroboters 1 durch axiales und/oder radiales Verschieben der Arbeitsspindel 9 ausgeglichen werden. Darüber hinaus ist es auch denkbar, dass die Arbeitsspindel 9 mittels der Magnetlagerung 30 in axiale und/oder radiale Vibration versetzt wird, um beispielsweise den Spanbruch zu beeinflussen.

Weiters kann vorgesehen sein, dass im Spindelgehäuse 13 eine weitere, nicht dargestellte Wicklung zum Antrieb der Arbeitsspindel 9 ausgebildet ist. Alternativ dazu kann vorgesehen sein, dass die Arbeitsspindel 9 mit einem Elektromotor gekoppelt ist, welcher zum Aufbringen eines Drehmomentes auf die Arbeitsspindel 9 dient.

Fig. 7 zeigt in einer schematischen Schnittdarstellung ein weiteres mögliches Ausführungsbeispiel der Arbeitsspindel 9 und des Spindelgehäuses 13 mit einem hydrodynamischen Gleitlager 35.

Ähnlich zur Ausbildung der Magnetlagerung 30 aus Fig. 6 kann hierbei eine Radiallagerung 31 und eine Axiallagerung 32 ausgebildet sein.

Weiters sind je Radiallagerung 31 und je Axiallagerung 32 mehrere Lagermediumeinströmöffnungen 36 vorgesehen, welche zum Einpumpen des Lagermediums dienen. Insbesondere bei den Radiallagerungen 31 können die Lagermediumeinströmöffnungen 36 über den Umfang verteilt angeordnet sein. Durch gezieltes Einpumpen des Lagermediums, etwa Luft oder eine Hydraulikflüssigkeit, in bestimmten der über den Umfang verteilten Lagermediumeinströmöffnungen 36 kann die Kraftwirkung auf die Arbeitsspindel 9 und somit auch die Position der Arbeitsspindel 9 gesteuert werden. Ebenso verhält es sich bei den Axiallagerungen 32.

Natürlich müssen auch Lagermediumausströmöffnungen 37 vorgesehen sein, über welche das eingebrachte Lagermedium wieder aus dem Inneren des Spindelgehäuses 13 entfernt werden kann. Sowohl die Lagermediumeinströmöffnungen 36 als auch die Lagermediumausströmöffnungen 37 sind in Fig. 7 vereinfacht dargestellt und müssen natürlich an entsprechende Steuerventile, Versorgungsleitungen und eine Lagermediumförderpumpe gekoppelt sein.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

**Bezugszeichenaufstellung**

| | | | |
|---|---|---|---|
| 1 | Knickarmroboter | 31 | Radiallagerung |
| 2 | Basis | 32 | Axiallagerung |
| 3 | Hebelarme | 33 | Wicklung |
| 4 | Drehgelenk | 34 | Dauermagnet |
| 5 | Winkel zwischen Hebelarmen | 35 | Gleitlager |
| 6 | Stellmotor | 36 | Lagermediumeinströmöffnung |
| 7 | Arbeitskopfaufnahme | 37 | Lagermediumausströmöffnung |
| 8 | Arbeitskopf | | |
| 9 | Arbeitsspindel | | |
| 10 | Bearbeitungswerkzeug | | |
| 11 | Werkstück | | |
| 12 | Recheneinheit | | |
| 13 | Spindelgehäuse | | |
| 14 | erste Lagerstelle | | |
| 15 | zweite Lagerstelle | | |
| 16 | Sensor Radialkraft | | |
| 17 | Radialkraft | | |
| 18 | Sensor Axialkraft | | |
| 19 | Axialkraft | | |
| 20 | Toolcenterpoint | | |
| 21 | Kraft in Toolcenterpoint | | |
| 22 | Anlagemanschette | | |
| 23 | Absauggehäuse | | |
| 24 | Absaugschlauch | | |
| 25 | Linearführung | | |
| 26 | Basis Arbeitskopf | | |
| 27 | weiterer Sensor Anlagemanschette | | |
| 28 | Vibrationssensor | | |
| 29 | Messelement | | |
| 30 | Magnetlagerung | | |

## Patentansprüche

1. Knickarmroboter (1) umfassend:
- eine Basis (2),
- eine Arbeitskopfaufnahme (7),
- mehrere Hebelarme (3), welche zwischen der Basis (2) und der Arbeitskopfaufnahme (7) angeordnet sind, wobei die Hebelarme (3) mittels Drehgelenken (4) miteinander gekoppelt sind und wobei pro Drehgelenk (4) zumindest ein Stellmotor (6) ausgebildet ist, welcher zur Verstellung des Winkels (5) zwischen den beiden mittels dem betreffenden Drehgelenk (4) gekoppelten Hebelarmen (3) dient,
- ein Arbeitskopf (8), welcher an der Arbeitskopfaufnahme (7) angeordnet ist, wobei der Arbeitskopf (8) eine in einem Spindelgehäuse (13) angeordnete Arbeitsspindel (9) umfasst, welche zumindest an einer ersten Lagerstelle (14) und einer zweiten Lagerstelle (15) im Spindelgehäuse (13) gelagert ist,
- eine Recheneinheit (12), welche zur Steuerung der Stellmotoren (6) dient,
**dadurch gekennzeichnet, dass**
an der ersten Lagerstelle (14) der Arbeitsspindel (9) und an der zweiten Lagerstelle (15) der Arbeitsspindel (9) jeweils zumindest ein Sensor (16) zur Erfassung einer Radialkraft (17) ausgebildet ist und dass an zumindest einer der beiden Lagerstellen (14, 15) zumindest ein Sensor (18) zur Erfassung einer Axialkraft (19) ausgebildet ist und dass die Recheneinheit (12) zur Berechnung einer Andrückkraft eines Bearbeitungswerkzeuges (10) an ein Werkstück (11) auf Basis der mittels der Sensoren (16, 18) erfassten Radialkraft (17) und Axialkraft (19) ausgebildet ist, um auf einen Verschleiß an der Schneide bzw. auf die Werkstückbeschaffenheit zu schließen oder die Genauigkeit des Knickarmroboters zu erhöhen.

2. Knickarmroboter nach Anspruch 1, **dadurch gekennzeichnet, dass** die beiden Lagerstellen (14, 15) durch eine Magnetlagerung (30) gebildet sind und die Sensoren (16, 18) durch eine Messeinrichtung zur Bestimmung der Feldstärke in der Magnetlagerung (30) und zur Erfassung der Auslenkung der Arbeitsspindel (9) relativ zum Spindelgehäuse (13) realisiert sind.

3. Knickarmroboter nach Anspruch 1 oder 2, **dadurch gekennzeichnet, dass** die Arbeitsspindel (9) mittels der Magnetlagerung (30) relativ zum Spindelgehäuse (13) verstellbar ist.

4. Knickarmroboter nach Anspruch 1, **dadurch gekennzeichnet, dass** die Sensoren (16) in Form von Piezoelementen ausgebildet sind.

5. Knickarmroboter nach Anspruch 1, **dadurch gekennzeichnet, dass** die beiden Lagerstellen (14, 15) durch ein hydrodynamisches Gleitlager (35) gebildet sind und die Sensoren (16, 18) durch eine Messeinrichtung zur Bestimmung des Hydraulikdruckes in den Lagerstellen (14, 15) und zur Erfassung der Auslenkung der Arbeitsspindel (9) relativ zum Spindelgehäuse (13) realisiert sind, wobei mittels der hydrodynamischen Gleitlager (35) die Arbeitsspindel (9) relativ zum Spindelgehäuse (13) verstellbar ist.

6. Knickarmroboter nach einem der vorhergehenden Ansprüche, **dadurch gekennzeichnet, dass** das Spindelgehäuse (13) mittels einer Linearführung (25) axial verschiebbar am Arbeitskopf (8) aufgenommen ist.

7. Knickarmroboter nach einem der vorhergehenden Ansprüche, **dadurch gekennzeichnet, dass** am Arbeitskopf (8) eine Anlagemanschette (22) ausgebildet ist, welche zum Anlegen an ein zu bearbeitendes Werkstück (11) vorgesehen ist und dass in der Anlagemanschette (22) ein weiterer Sensor (27) zur Erfassung der Anlagekraft der Anlagemanschette (22) am Werkstück (11) ausgebildet ist.

8. Knickarmroboter nach einem der vorhergehenden Ansprüche, **dadurch gekennzeichnet, dass** am Arbeitskopf (8) ein Vibrationssensor (28) ausgebildet ist, welcher zur Erfassung von Schwingungen am Werkstück (11) dient.

9. Knickarmroboter nach Anspruch 8, **dadurch gekennzeichnet, dass** der Vibrationssensor (28) in der Anlagemanschette (22) aufgenommen ist.

10. Knickarmroboter nach Anspruch 8 oder 9, **dadurch gekennzeichnet, dass** der Vibrationssensor (28) frei schwingbar am Arbeitskopf (8), insbesondere in der Anlagemanschette (22), aufgenommen ist und mit dem Werkstück (11) koppelbar ist.

11. Knickarmroboter nach einem der Ansprüche 8 bis 10, **dadurch gekennzeichnet, dass** der Vibrationssensor (28) in Form eines Beschleunigungssensors, insbesondere in Form eines Piezosensors ausgebildet ist, mittels welchem seine eigene Ausrichtung und auch eine Amplitude und Richtung der Schwingung des Werkstückes (11) bestimmbar ist, wenn der Vibrationssensor (28) am Werkstück (11) anliegt.

12. Knickarmroboter nach einem der Ansprüche 8 bis 10, **dadurch gekennzeichnet, dass** der Vibrationssensor (28) in Form eines Laser-Doppler-Vibrometers ausgebildet ist.

13. Verfahren zum spanenden Bearbeiten eines Werkstückes (11) mittels einem Knickarmroboter (1) nach einem der vorhergehenden Ansprüche, wobei in der Arbeitsspindel (9) ein Bearbeitungswerkzeug (10) zur spanenden Bearbeitung des Werkstückes (11) aufgenommen ist, **dadurch gekennzeichnet, dass** beim Andrücken des Bearbeitungswerkzeuges (10) an das Werkstück (11) mittels der Sensoren (16, 18) die Radialkraft (17) und die Axialkraft (19) in den Lagerstellen (14, 15) der Arbeitsspindel (9) erfasst wird und in der Recheneinheit (12) dadurch die Andrückkraft des Bearbeitungswerkzeuges (10) berechnet wird, um auf einen Verschleiß an der Schneide bzw. auf die Werkstückbeschaffenheit zu schließen oder die Genauigkeit des Knickarmroboters zu erhöhen.

14. Verfahren nach Anspruch 13, **dadurch gekennzeichnet, dass** auf Basis der berechneten Andrückkraft des Bearbeitungswerkzeuges (10) und auf Basis einer bekannten kraftabhängigen Bauteilverformung des Knickarmroboters (1) und/oder Verformung des Werkstückes eine notwendige Lagekompensation berechnet wird und zumindest in einem der Stellmotoren (6) die notwendige Lagekompensation realisiert wird.

15. Verfahren nach Anspruch 13 oder 14, **dadurch gekennzeichnet, dass** auf Basis der berechneten Andrückkraft des Bearbeitungswerkzeuges (10) und auf Basis einer bekannten kraftabhängigen Bauteilverformung des Knickarmroboters (1) eine notwendige Lagekompensation berechnet wird und dass die notwendige Lagekompensation zumindest teilweise durch Verstellung der Arbeitsspindel (9) relativ zu dem Spindelgehäuse (13) realisiert wird.

16. Verfahren nach einem der Ansprüche 13 bis 15, **dadurch gekennzeichnet, dass** bei einer Magnetlagerung (30) die Radialkraft (17) und die Axialkraft (19) in den Lagerstellen (14, 15) durch Bestimmung der Feldstärke in den Magnetlagerungen (30) und durch Erfassung der Auslenkung der Arbeitsspindel (9) erfasst wird.

17. Verfahren nach Anspruch 16, **dadurch gekennzeichnet, dass** eine Verstellung der Arbeitsspindel (9) relativ zu dem Spindelgehäuse (13) dadurch realisiert wird, dass die Feldstärke in den Magnetlagerungen (30) lokal angepasst wird.

18. Verfahren nach einem der Ansprüche 13 bis 17, **dadurch gekennzeichnet, dass** bei Verwendung eines Bearbeitungswerkzeuges (10) mit einem symmetrischem Schneidenaufbau, insbesondere bei Verwendung eines Bohrwerkzeuges, ein Anlagewinkel zwischen einer Drehachse des Bearbeitungswerkzeuges (10) und der Werkstückoberfläche an welcher das Bearbeitungswerkzeug (10) anliegt mittels dem Hebelgesetz aus den erfassten Radialkräften berechnet wird.

19. Verfahren nach einem der Ansprüche 13 bis 18, **dadurch gekennzeichnet, dass** zusätzlich zur berechneten Andrückkraft des Bearbeitungswerkzeuges (10), die durch den weiteren Sensor erfasste Anlagekraft der Anlagemanschette (22) am Werkstück (11) zur Berechnung der notwendigen Lagenkompensation mit einbezogen wird.

20. Verfahren nach einem der Ansprüche 13 bis 19, **dadurch gekennzeichnet, dass** in der Recheneinheit (12) das Signal des Vibrationssensors (28) ausgewertet wird und auf Basis des Signals des Vibrationssensors (28) und der gemessenen Radialkraft (17) und Axialkraft (19) in den Lagerstellen (14, 15) die notwendige Lagekompensation berechnet wird.

## Claims

1. An articulated-arm robot (1) comprising:
- a base (2),
- a working head holder (7),
- several lever arms (3), which are arranged between the base (2) and the working head holder (7), wherein the lever arms (3) are coupled to one another by means of revolute joints (4) and wherein for each revolute joint (4) at least one actuator (6) is provided, which serves for adjustment of the angle (5) between the two lever arms (4) coupled by means of the respective revolute joint (3),
- a working head (8), which is arranged on the working head holder (7), wherein the working head (8) comprises a working spindle (9), which is arranged in a spindle housing (13) and is mounted in the spindle housing (13) at least at a first bearing point (14) and a second bearing point (15),
- a computational unit (12) which serves for controlling the actuators (6), **characterized in that**
the first bearing point (14) of the working spindle (9) and the second bearing point (15) of the working spindle (9) each contain at least one sensor (16) for sensing a radial force (17) and that at least one sensor (18) for sensing an axial force (19) is formed on at least one of the two bearing points (14, 15) and that the computational unit (12) is designed for calculating a pressing force of a processing tool (10) against a workpiece (11) based on the radial force (17) and the axial force (19) sensed by means of the sensors (16, 18) so as to infer wear on the cutting edge and/or the workpiece condition, or to increase the accuracy of the articulated-arm robot.

2. The articulated-arm robot according to claim 1, **characterized in that** the two bearing points (14, 15) are formed by a magnetic bearing (30) and the sensors (16, 18) are realized by a measuring device for determining the field strength in the magnetic bearing (30) and for sensing the deflection of the working spindle (9) relative to the spindle housing (13).

3. The articulated-arm robot according to claim 1 or 2, **characterized in that** the working spindle (9) is adjustable relative to the spindle housing (13) by means of the magnetic bearing (30).

4. The articulated-arm robot according to claim 1, **characterized in that** the sensors (16) are designed in the form of piezoelectric elements.

5. The articulated-arm robot according to claim 1, **characterized in that** the two bearing points (14, 15) are formed by a hydrodynamic sliding bearing (35) and the sensors (16, 18) are realized by a measuring device for determining the hydraulic pressure in the bearing points (14, 15) and for sensing the deflection of the working spindle (9) relative to the spindle housing (13), wherein the working spindle (9) can be adjusted relative to the spindle housing (13) by means of the hydrodynamic sliding bearings (35).

6. The articulated-arm robot according to one of the preceding claims, **characterized in that** the spindle housing (13) is held on the working head (8) by means of a linear guide (25) such that it can be displaced axially.

7. The articulated-arm robot according to one of the preceding claims, **characterized in that** a support sleeve (22), which is provided for supporting a workpiece (11) to be processed, is formed on the working head (8) and that in the support sleeve (22), a further sensor (27) is provided for sensing the support force of the support sleeve (22) on the workpiece (11).

8. The articulated-arm robot according to one of the preceding claims, **characterized in that** a vibration sensor (28), which is provided for sensing vibrations on the workpiece (11), is provided on the working head (8).

9. The articulated-arm robot according to claim 8, **characterized in that** the vibration sensor (28) is held in the support sleeve (22).

10. The articulated-arm robot according to claim 8 or 9, **characterized in that** the vibration sensor (28) is held on the working head (8), in particular in the support sleeve (22), such that it can freely vibrate and can be coupled to the workpiece (11).

11. The articulated-arm robot according to one of claims 8 to 10, **characterized in that** the vibration sensor (28) is provided in the form of an acceleration sensor, in particular in the form of a piezoelectric sensor, by means of which its own orientation and also an amplitude and direction of the vibration of the workpiece (11) can be determined while the vibration sensor (28) rests on the workpiece (11).

12. The articulated-arm robot according to one of claims 8 to 10, **characterized in that** the vibration sensor (28) is provided in the form of a laser Doppler vibrometer.

13. A method for machining a workpiece (11) by means of an articulated-arm robot (1) according to one of the preceding claims, wherein a processing tool (10) for machining the workpiece (11) is held in the working spindle (9), **characterized in that** when the processing tool (10) is pressed against the workpiece (11), the radial force (17) and the axial force (19) in the bearing points (14, 15) of the working spindle (9) are sensed by means of the sensors (16, 18) and the pressing force of the processing tool (10) is hence calculated in the computational unit (12) so as to infer wear on the cutting edge and/or the workpiece condition, or to increase the accuracy of the articulated-arm robot.

14. The method according to claim 13, **characterized in that** on the basis of the calculated pressing force of the processing tool (10) and on the basis of a known force-dependent component deformation of the articulated-arm robot (1) and/or deformation of the workpiece, a necessary compensation of position is calculated and the necessary compensation of position is realized at least in one of the actuators (6).

15. The method according to claim 13 or 14, **characterized in that** on the basis of the calculated pressing force of the processing tool (10) and on the basis of a known force-dependent component deformation of the articulated-arm robot (1), a necessary compensation of position is calculated and the necessary compensation of position is realized at least partially by adjusting the working spindle (9) relative to the spindle housing (13).

16. The method according to one of claims 13 to 15, **characterized in that** in case of a magnetic bearing (30), the radial force (17) and the axial force (19) in the bearing points (14, 15) are detected by determination of the field strength in the magnetic bearings (30) and by sensing the deflection of the working spindle (9).

17. The method according to claim 16, **characterized in that** an adjustment of the working spindle (9) relative to the spindle housing (13) is realized by the field strength in the magnetic bearings (30) being locally adapted.

18. The method according to one of claims 13 to 17, **characterized in that** during use of a processing tool (10) with a symmetric setup of the cutting edge, in particular during use of a drilling tool, a support angle between the axis of rotation of the processing tool (10) and the workpiece surface which the processing tool (10) rests on is calculated from the sensed radial forces by means of the lever principle.

19. The method according to one of claims 13 to 18, **characterized in that** additionally to the calculated pressing force of the processing tool (10), the support force of the support sleeve (22) on the workpiece (11) sensed by the further sensor is included in the calculation of the necessary compensation of position.

20. The method according to one of claims 13 to 19, **characterized in that** the signal of the vibration sensor (28) is evaluated in the computational unit (12) and based on the signal of the vibration sensor (28) and the measured radial force (17) and axial force (19) in the bearing points (14, 15), the necessary compensation of position is calculated.

## Revendications

1. Robot à bras articulé (1) comprenant :
- une base (2),
- un logement de tête de travail (7),
- plusieurs bras de levier (3), qui sont disposés entre la base (2) et le logement de tête de travail (7), dans lequel les bras de levier (3) sont couplés entre eux au moyen d'articulations rotatives (4) et dans lequel, pour chaque articulation rotative (4), au moins un servomoteur (6) est prévu, qui permet le réglage de l'angle (5) entre les deux bras de levier (3) couplés au moyen de l'articulation (4) concernée,
- une tête de travail (8), qui est disposée au niveau du logement de tête de travail (7), dans lequel la tête de travail (8) comprend une broche de travail (9), disposée dans un carter de broche (13), qui est logée dans le carter de broche (13) au niveau d'un premier point de palier (14) et d'un deuxième point de palier (15),
- une unité de calcul (12), qui permet de contrôler les servomoteurs (6),
**caractérisé en ce que**
au niveau du premier point de palier (14) de la broche de travail (9) et au niveau du deuxième point de palier (15) de la broche de travail (9), se trouve respectivement au moins un capteur (16) pour la mesure d'une force radiale (17) et **en ce que**, au niveau d'au moins un des deux points de palier (14, 15), est disposé au moins un capteur (18) pour la mesure d'une force axiale (19) et **en ce que** l'unité de calcul (12) est conçue pour le calcul d'une force de compression d'un outil d'usinage (10) sur une pièce (11) sur la base des forces radiale (17) et axiale (19) mesurées au moyen des capteurs (16, 18), afin de déterminer une usure au niveau du tranchant respectivement la qualité de la pièce ou d'augmenter la précision du robot à bras articulé.

2. Robot à bras articulé selon la revendication 1, **caractérisé en ce que** les deux points de palier (14, 15) sont constitués d'un palier magnétique (30) et les capteurs (16, 18) sont réalisés à l'aide d'un dispositif de mesure pour la détermination de l'intensité du champ dans le palier magnétique (30) et pour la mesure de la déviation de la broche de travail (9) par rapport au carter de broche (13).

3. Robot à bras articulé selon la revendication 1 ou 2, **caractérisé en ce que** la broche de travail (9) peut être déplacée par rapport au carter de broche (13) au moyen du palier magnétique (30).

4. Robot à bras articulé selon la revendication 1, **caractérisé en ce que** les capteurs (16) sont réalisés sous la forme d'éléments piézoélectriques.

5. Robot à bras articulé selon la revendication 1, **caractérisé en ce que** les deux points de palier (14, 15) sont constitués d'un palier lisse hydrodynamique (35) et les capteurs (16, 18) sont réalisés à l'aide d'un dispositif de mesure pour la détermination de la pression hydraulique dans les points de palier (14, 15) et pour la mesure de la déviation de la broche de travail (9) par rapport au carter de broche (13), dans lequel le palier lisse hydrodynamique (35) permet de déplacer la broche de travail (9) par rapport au carter de broche (13).

6. Robot à bras articulé selon l'une des revendications précédentes, **caractérisé en ce que** le carter de broche (13) est logé de manière coulissante axialement au moyen d'un guidage linéaire (25) au niveau de la tête de travail (8).

7. Robot à bras articulé selon l'une des revendications précédentes, **caractérisé en ce que**, au niveau de la tête de travail (8), est disposée une manchette d'appui (22), qui est prévue pour l'appui contre une pièce (11) à usiner, et **en ce que**, dans la manchette d'appui (22), un autre capteur (27) est conçu pour la mesure de la force d'appui de la manchette d'appui (22) contre la pièce (11).

8. Robot à bras articulé selon l'une des revendications précédentes, **caractérisé en ce que**, au niveau de la tête de travail (8), est disposé un capteur de vibrations (28), qui permet la mesure des vibrations au niveau de la pièce (11).

9. Robot à bras articulé selon la revendication 8, **caractérisé en ce que** le capteur de vibrations (28) est logé dans la manchette d'appui (22).

10. Robot à bras articulé selon la revendication 8 ou 9, **caractérisé en ce que** le capteur de vibrations (28) est logé de manière vibrante librement au niveau de la tête de travail (8), plus particulièrement dans la manchette d'appui (22), et peut être couplé avec la pièce (11).

11. Robot à bras articulé selon l'une des revendications 8 à 10, **caractérisé en ce que** le capteur de vibrations (28) est conçu sous la forme d'un capteur d'accélération, plus particulièrement sous la forme d'un capteur piézoélectrique, au moyen duquel sa propre orientation ainsi qu'une amplitude et une direction de la vibration de la pièce (11) peuvent être déterminées lorsque le capteur de vibrations (28) s'appuie contre la pièce (11).

12. Robot à bras articulé selon l'une des revendications 8 à 10, **caractérisé en ce que** le capteur de vibrations (28) est conçu sous la forme d'un vibromètre à laser Doppler.

13. Procédé d'usinage par formation de copeaux d'une pièce (11) au moyen d'un robot à bras articulé (1) selon l'une des revendications précédentes, dans lequel, dans la broche de travail (9), est logé un outil d'usinage (10) pour l'usinage par enlèvement de copeaux de la pièce (11), **caractérisé en ce que**, lors de la pression de l'outil d'usinage (10) contre la pièce (11), les forces radiale (17) et axiale (19) dans les points de palier (14, 15) de la broche de travail (9) sont mesurées au moyen des capteurs (16, 18) et, dans l'unité de calcul (12) et la force de compression de l'outil d'usinage (10) est calculée afin d'en déduire l'usure au niveau du tranchant respectivement la qualité de la pièce ou d'augmenter la précision du robot à bras articulé.

14. Procédé selon la revendication 13, **caractérisé en ce que**, sur la base de la force de compression calculée de l'outil d'usinage (10) et sur la base d'une déformation connue d'un composant, due aux forces, du robot à bras articulé (1) et/ou d'une déformation de la pièce, une compensation de position nécessaire est calculée et la compensation de position nécessaire est réalisée au moins dans un des servomoteurs (6).

15. Procédé selon la revendication 13 ou 14, **caractérisé en ce que**, sur la base de la force de compression calculée de l'outil d'usinage (10) et sur la base d'une déformation, due à une force, d'un composant du robot à bras articulé (1), une compensation de position nécessaire est calculée et **en ce que** la compensation de position nécessaire est réalisée au moins partiellement par le déplacement de la broche de travail (9) par rapport au carter de broche (13).

16. Procédé selon l'une des revendications 13 à 15, **caractérisé en ce que**, dans le cas d'un palier magnétique (30), les forces radiale (17) et axiale (19) dans les points de palier (14, 15) sont mesurées en déterminant l'intensité du champ dans les paliers magnétiques (30) et en mesurant la déviation de la broche de travail (9).

17. Procédé selon la revendication 16, **caractérisé en ce qu'**un déplacement de la broche de travail (9) par rapport au carter de broche (13) est réalisé grâce au fait que l'intensité du champ dans les paliers magnétiques (30) est adaptée localement.

18. Procédé selon l'une des revendications 13 à 17, **caractérisé en ce que**, lors de l'utilisation d'un outil d'usinage (10) avec une structure de coupe symétrique, plus particulièrement lors de l'utilisation d'un outil de perçage, un angle d'appui entre un axe de rotation de l'outil d'usinage (10) et la surface de la pièce contre laquelle l'outil d'usinage (10) s'appuie est calculé au moyen de la loi des leviers à partir des forces radiales mesurées.

19. Procédé selon l'une des revendications 13 à 18, **caractérisé en ce que**, en plus de la force de compression calculée de l'outil d'usinage (10), la force d'appui de la manchette d'appui (22) contre la pièce (11), mesurée par l'autre capteur, est utilisée pour le calcul de la compensation de position nécessaire.

20. Procédé selon l'une des revendications 13 à 19, **caractérisé en ce que**, dans l'unité de calcul (12), le signal du capteur de vibrations (28) est analysé et, sur la base du signal du capteur de vibrations (28) et des forces radiale (17) et axiale (19) dans les points de palier (14, 15), la compensation de position nécessaire est calculée.
